## Europäisches Patentamt

## European Patent Office

## Office européen des brevets

(19)

(11) Veröffentlichungsnummer: **0 065 685**
**B1**

(12)

# EUROPÄISCHE PATENTSCHRIFT

(45) Veröffentlichungstag der Patentschrift:
**03.10.84**

(21) Anmeldenummer: **82104008.6**

(22) Anmeldetag: **08.05.82**

(51) Int. Cl.³: **F 16 K  11/06,** F 23 D  13/38,
B 01 F  5/06

(54) **Vorrichtung zur Mengen- und/oder Verhältnisregelung von zwei Gas- und/oder Flüssigkeitsströmen.**

(30) Priorität: **23.05.81  DE 3120637**

(43) Veröffentlichungstag der Anmeldung:
**01.12.82 Patentblatt 82/48**

(45) Bekanntmachung des Hinweises auf die Patenterteilung:
**03.10.84 Patentblatt 84/40**

(84) Benannte Vertragsstaaten:
**AT BE FR GB IT LU NL SE**

(56) Entgegenhaltungen:
**DE - C - 652 764**
**FR - A - 326 825**
**GB - A - 418 170**
**GB - A - 499 122**
**GB - A - 743 980**
**US - A - 2 961 005**
**US - A - 3 416 570**

(73) Patentinhaber: **Ruhrgas Aktiengesellschaft,**
**Huttropstrasse 60 Postfach 10 32 52,**
**D-4300 Essen 1 (DE)**

(72) Erfinder: **Korsmeier, Wilhelm, Spiekeroogstrasse 5,**
**D-4350 Recklinghausen (DE)**
Erfinder: **Vissel, Friedrich, Dr. rer. nat. Dipl.-Phys.,**
**Beisingerweg 77, D-4350 Recklinghausen (DE)**

## Beschreibung

Die Erfindung betrifft eine Vorrichtung zur Mengen- und/oder Verhältnisregelung von zwei gas- und/oder Flüssigkeitsströmen bei normalem oder erhöhtem Druck, die aus einem rohrförmigen Gehäuse mit zwei seitlichen Eintrittsöffnungen mit Anschlussstutzen für die Zuführung der beiden Komponenten und einem Innenrohr mit mindestens einer mit einer Gehäuseeintrittsöffnung korrespondierenden seitlichen Eintrittsöffnung und einer axialen Austrittsöffnung besteht, und bei der das Innenrohr mittels eines durch die Stirnseite des Gehäuses geführten Stellantriebes im Gehäuse drehbar und/oder in Achsrichtung bewegbar ist.

Bei sehr vielen, insbesondere technischen Prozessen unterschiedlicher Art werden Einzelkomponenten in bestimmten Mengenverhältnissen benötigt. Dies gilt für Stoffe aller Art. Für gasförmig und/oder flüssige Komponenten, die anschliessend beispielsweise Verbrauchs- oder Weiterverarbeitungsanlagen zugeführt werden, erfolgt die Regelung der Mengen- und/oder des Mischungsverhältnisses bisher vielfach durch Einbau von Mengenstromreglern — meist Ventilen —, die in den einzelnen Komponentenzuleitungen angeordnet und derart miteinander verbunden sind, dass bei Veränderung eines Mengenstromes der (die) übrige(n) Mengenstrom(-ströme) automatisch im entsprechenden Mass verändert wird (werden). Bei dieser Art der Regelung wird also das Verhältnis der Komponenten zueinander konstant gehalten, unabhängig davon, welche Gemischmenge benötigt wird. Die Regelgenauigkeit und der Regelbereich lassen bei den bekannten Vorrichtungen jedoch meist zu wünschen übrig.

In manchen Fällen ist es erforderlich, das Mengenverhältnis der Komponenten zu ändern und ausserdem die Gemischmenge zu variieren. Für diesen Zweck ist aus dem deutschen Patent Nr. 652764 eine Vorrichtung bekannt, die aus einem rohrförmigen Gehäuse mit Zutrittsöffnungen für die Komponenten, einem im Gehäuse angeordneten, mit entsprechenden Schlitzöffnungen versehenen Düsenkörper und einem im Düsenkörper angeordneten Kolben besteht. Düsenkörper und Kolben sind unabhängig voneinander längsverschiebbar im Gehäuse bzw. im Düsenkörper angeordnet. Ausserdem kann der Düsenkörper gemeinsam mit dem Kolben gedreht werden. Durch die Längs- und Drehbewegung werden die freien Einströmquerschnitte für die Komponenten verändert, und zwar wird durch die Längsverschiebung des Düsenkörpers und des Kolbens das Mischungsverhältnis und durch gemeinsames Drehen der beiden beweglichen Organe der Gesamtdurchgang bzw. der Mengenstrom der beiden Komponenten eingestellt. Zur Veränderung des Mengenverhältnisses der Komponenten müssen also zwei Teile unabhängig voneinander gegen das äussere Gehäuse verschoben werden. Da Gehäuse und Düsenkörper bzw. Düsenkörper und Kolben metallischen Kontakt haben, sind die zu überwindenden Reibungskräfte sehr gross. Weiterhin ist bei Durchleitung von Gasen oder Flüssigkeiten, deren Temperaturen von der Umgebungstemperatur abweichen, entweder die Dichtheit oder die Beweglichkeit nicht mehr gewährleistet.

Eine Vorrichtung mit den Merkmalen des Oberbegriffs des Hauptanspruchs zeigt ausserdem die US-A Nr. 3416570.

Da bei den vorgenannten Vorrichtungen das Mengenverhältnis auch von den Strömungsgeschwindigkeiten der Komponenten abhängig ist, verändert sich das Verhältnis unerwünscht bei Änderung der Strömungsgeschwindigkeit. Eine Konstanz des Mengenverhältnisses ist also unter solchen Umständen bei Benutzung der bekannten Vorrichtungen nicht gewährleistet.

Der Erfindung liegt die Aufgabe zugrunde, eine Vorrichtung zur Mengen- und/oder Verhältnisregelung zu schaffen, mit der bei wechselnden Durchflüssen das Mengenverhältnis der Komponenten konstant gehalten werden kann und die es ausserdem erlaubt, das Mengenverhältnis der Komponenten, z.B. in Abhängigkeit von deren Eigenschaften oder von der Durchflussmenge zu verändern, wobei alle Regelmassnahmen unabhängig von Temperatureinflüssen in einfachster Weise und unter Aufwand geringer Stellkräfte mit grosser Genauigkeit durchzuführen sind.

Diese Aufgabe wird erfindungsgemäss durch die im kennzeichnenden Teil des Anspruches 1 genannten Merkmale gelöst. Von der vorbekannten Vorrichtung unterscheidet sich der Erfindungsgegenstand u.a. dadurch, dass im Gehäuse nur ein bewegliches Teil — das Innenrohr — vorhanden ist, und dass dessen Aussendurchmesser erheblich kleiner ist als der Innendurchmesser des Gehäuses, so dass ein Ringraum vorhanden ist, in bzw. durch den eine der Komponenten strömt. Eine Vermischung der Komponenten im Ringraum wird verhindert durch mindestens eins der mit dem Innenrohr fest verbundenen Dichtungs- und Absperrelemente. Die Einstellung bzw. Regelung der Mengenströme der Komponenten erfolgt bei der erfindungsgemässen Vorrichtung durch Bewegung des Innenrohres in Achsrichtung, die Einstellung bzw. Regelung des Mischungsverhältnisses durch Drehung des Innenrohres, durch die eine der Gehäuseeintrittsöffnungen mit Hilfe des am Innenrohr bzw. an zwei Dichtungs- und Absperrelementen befestigten Rohrsegmentes teilweise bis vollständig verschlossen werden kann. Dadurch, dass nur die mit an sich bekannten Kunststoffgleitringen versehenen Dichtungs- und Absperrelemente mit dem Gehäuse in Berührung stehen, sind die Stellkräfte sehr gering. Temperatureinflüsse haben keine Auswirkungen auf Beweglichkeit oder Dichtheit der Vorrichtung. Durch die Anordnung von an sich bekannten Differenz- oder Gleichdruckreglern an den Gehäuseeintrittsöffnungen werden die Strömungsgeschwindigkeiten der Komponenten und damit das Mengenverhältnis konstant gehalten.

Je nach Anwendungsgebiet können die Komponenten nach erfolgter Einstellung des Mengenverhältnisses und/oder der Mengenströme entweder gemischt oder getrennt bis zum Verbrauchsort, z.B. einer Feuerstelle, geführt werden. Die getrennte Führung ist oftmals im ex-geschützten Anwendungsbereichen erforderlich.

Die beiden Komponenten werden dann entsprechend Anspruch 4 über zwei koaxiale Anschlussleitungen aus dem Gehäuse geführt. Während die äussere Leitung mit dem Gehäuse verbunden ist, ist die innere Leitung für die zweite Komponente über einen flexiblen Rohrverbinder, z.B. mit einem Faltenbalg, mit dem Innenrohr verbunden, um die Übertragung der Längs- und Drehbewegungen des Innenrohres auf die weiterführende Leitung zu verhindern.

Eine erfindungsgemässe Weiterbildung der neuen Vorrichtung gemäss den Ansprüchen 5 und 6 ermöglicht es, aus den in geregelten Mengen zugeführten Komponenten ein homogenes Gemisch herzustellen.

Es ist bekannt, dass die Vermischung von zwei Komponenten, die durch ein Zentralrohr und ein dieses umgebendes Ringrohr einem weiterführenden Rohr mit dem Durchmesser des Ringrohres zugeführt werden, sich nur nach relativ langen Strömungswegen vermischen. Es sind deshalb bereits eine Vielzahl von dynamischen und statischen Mischeinrichtungen entwickelt worden. Der Vorteil der erfindungsgemässen Vorrichtungsteile besteht vor allem darin, dass diese als Bestandteile der Regelungsvorrichtung in das Gehäuse dieser Vorrichtung integriert werden können, d.h. dass mit einem einzigen Bauteil sowohl die Regelung der Gemischmengen als auch die Bildung eines homogenen Gemisches aus den Komponenten erreicht werden kann.

Die erfindungsgemässe Vorrichtung wird nachstehend unter Bezugnahme auf die in der Zeichnung schematisch dargestellte beispielsweise Ausführungsform näher erläutert.

Fig. 1 zeigt einen Längsschnitt der Gemischregelvorrichtung,

Fig. 2 den Schnitt A-A, und

Fig. 3 den Schnitt B-B in Fig. 1.

Die Vorrichtung zur Gemischregelung besteht aus dem Gehäuse 1, mit den Eintrittsöffnungen 2, 3 für die durch die Anschlussstutzen 4, 5 zugeführten Gemischkomponenten. Im Gehäuse 1 befindet sich das Innenrohr 6, das, korrespondierend mit der Gehäuseeintrittsöffnung 3, Eintrittsöffnungen 7 für die durch Anschlussstutzen 5 zugeführte Gemischkomponente aufweist.

Das Innenrohr 6 ist einerseits fest mit dem scheibenförmigen Dichtungs- und Absperrelement 8 verbunden, das andererseits über die Achse 9 mit dem nicht dargestellten Stellantrieb für die Bewegung des Innenrohres verbunden ist.

Die Achse 9 ist in bekannter Weise gasdicht durch die Gehäusestirnwand 10 geführt.

Mit dem Innenrohr sind die beiden ringförmigen Dichtungs- und Absperrelemente 11, 12 fest verbunden. Der Abstand zwischen den beiden Gehäuseeintrittsöffnungen 2, 3 und die Abstände zwischen den Dichtungs- und Absperrelementen 8, 11, 12 sind so bemessen, dass bei voller offen Stellung, d.h. bei maximalem Mengenstrom – wie aus der Zeichnung (mit ausgezogenen Linien) ersichtlich –, alle Dichtungs- und Absperrelemente sich ausserhalb des Bereiches der Gehäuseeintrittsöffnungen befinden. Nach axialer Verschiebung des Innenrohres, d.h. bei vermindertem Mengenstrom, befinden sich die Dichtungs- und Absperrelemente 8 und 12 im Bereich der Gehäuseeintrittsöffnungen 2, 3, während das Element 11 den Ringraum zwischen den Gehäuseeintrittsöffnungen 2 und 3 sperrt bzw. abdichtet.

Es ist ersichtlich, dass durch die axiale Verschiebung des Innenrohres die Grösse der Gehäuseeintrittsöffnungen nur um die Breite der Elemente 8, 12 – oder weniger – vermindert wird, dass jedoch der freie Durchströmquerschnitt für die zugeführten Medien sich entsprechend der Axialverschiebung verkleinert, da die hinter die Elemente 8, 12 gelangenden Gemischkomponenten nicht durch den Ringraum oder das Innenrohr abströmen können, d.h. durch die axiale Bewegung des Innenrohres werden die Mengenströme der Gemischkomponenten geregelt bzw. eingestellt.

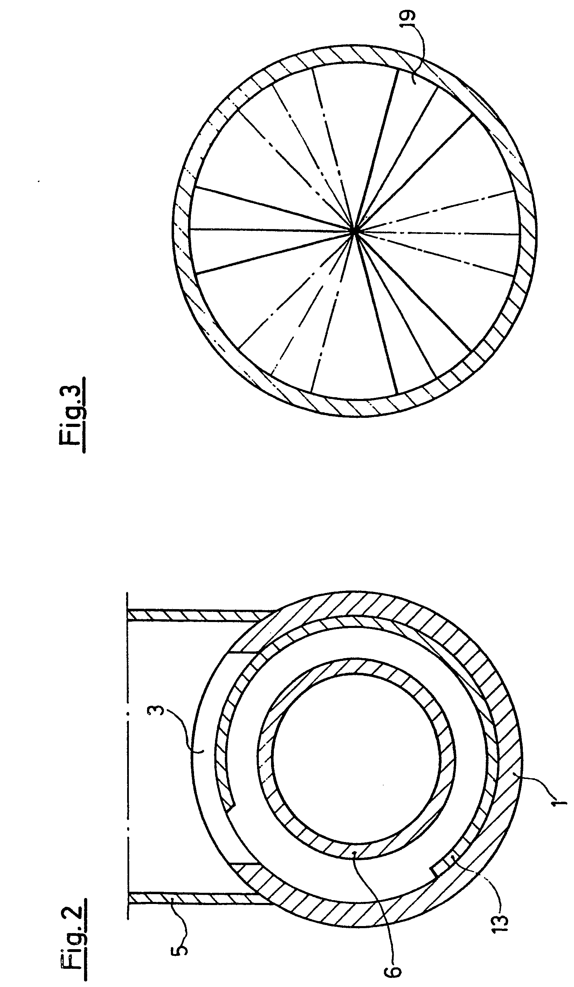

Zum Einstellen des Mischungsverhältnisses der durch die Anschlussstutzen 4, 5 zugeführten Komponenten dient das Rohrsegment 13, das mit den Dichtungs- und Absperrelementen 8 und 11 fest verbunden ist und innen an der Gehäusewand anliegt. In Fig. 2 ist das Rohrsegment 13 in einer die Öffnung 3 teilweise verschliessenden Stellung dargestellt. Die Öffnung des Rohrsegmentes 13 hat die gleiche Grösse und Form wie die Gehäuseeintrittsöffnung 3. Durch Drehen des Innenrohres kann die Gehäuseeintrittsöffnung 3 teilweise oder ganz durch das Rohrsegment verschlossen werden, d.h. die Menge der durch den Anschlussstutzen 5 zugeführten Gemischkomponente kann unabhängig von der durch den Stutzen 4 zugeführten Komponenten-Menge verändert werden.

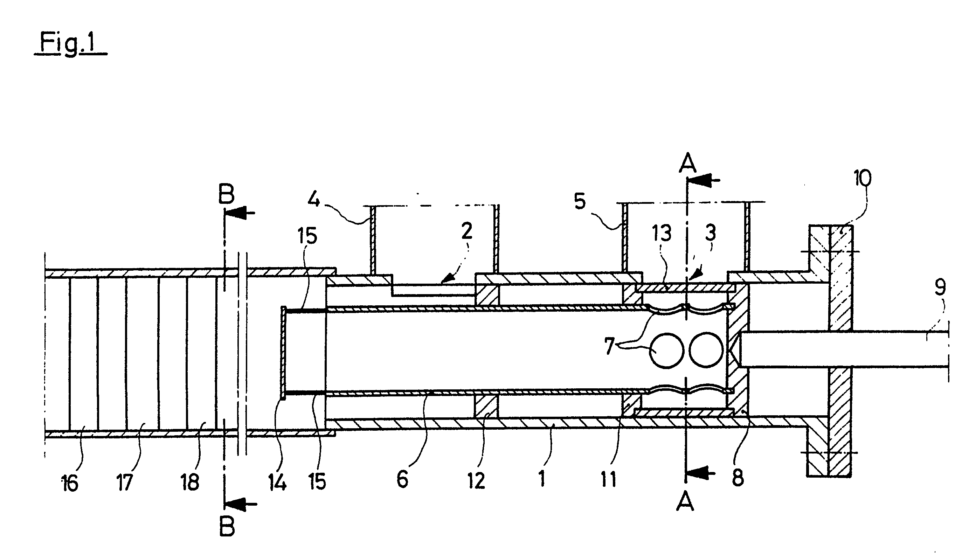

Da über das Rohrsegment 13 und die Dichtungs- und Absperrelemente 8 und 11 eine starre Verbindung zwischen dem Innenrohr 6 und der Achse 9 des Stellantriebes besteht, kann – abweichend von der in Fig. 1 dargestellten Ausführungsform – auf das zwischen den Dichtungs- und Absperrelementen 8 und 11 befindliche Teilstück des Innenrohres verzichtet werden, d.h. die Eintrittsöffnung des Innenrohres kann durch das vom Dichtungs- und Absperrelement 11 umgebene Innenrohrstück gebildet werden. Ausserdem können zur sicheren Abdichtung zwischen Rohrsegment 13 und Gehäuseinnenwand auf der Aussenseite des Rohrsegmentes ein oder mehrere (in der Zeichnung nicht dargestellt) Dichtungsstreifen in Achsrichtung des Gehäuses angebracht werden.

Die Gehäuseeintrittsöffnungen 2, 3 können praktisch beliebige Formen haben und z.B. rund, rechteckig, quadratisch oder auch trapezförmig ausgebildet sein. Eine Trapezform, bei der der schmalere Bereich bei Axialverschiebungen des Innenrohres als letzter verkleinert bzw. abgesperrt wird, hat den Vorteil, dass im Bereich geringer Mengenströme eine besonders genaue Regelung erreicht wird, da eine bestimmte Axial-

verschiebung eine relativ geringere Mengenänderung bewirkt als im breiten (Basis-)Bereich der trapezförmigen Öffnung. Bei Verwendung trapezförmiger Gehäuseeintrittsöffnungen 2, 3 muss jedoch gewährleistet sein, dass die freien Durchstromquerschnitte für unterschiedliche Mengenströme in allen Fällen, d.h. auch bei unterschiedlichen Mengenverhältnissen, einander ähnlich sind. Dies kann entweder durch eine entsprechende, trapezförmige Form der Öffnung im Rohrsegment 13 oder durch Verwendung eines bekannten Funktionsgetriebes für den die Drehbewegung des Innenrohres — und damit des Rohrsegmentes — bewirkenden Antrieb erreicht werden. Als Stellantrieb für das Innenrohr können unterschiedliche, bekannte Mittel verwendet werden, z.B. kann die Drehbewegung von einem (elektrisch angetriebenen) Zahnrad auf ein auf der Achse 9 befestigtes Zahnrad ausgelöst werden. Die axiale Bewegung des Innenrohres kann z.B. durch einen pneumatisch oder hydraulisch betätigten Antrieb, zweckmässigerweise unter Zwischenschaltung einer Drehkupplung, um Rückwirkungen des Drehantriebes auf den Axialantrieb zu vermeiden, bewirkt werden. (Die Auswahl der Antriebsarten für den Stelltrieb kann in weiten Grenzen den am Aufstellungsort der Regelvorrichtung vorhandenen Gegebenheiten bzw. den verfügbaren Energien angepasst werden.)

Um eine schnelle, homogene Vermischung der durch die beiden Anschlussstutzen 4, 5 bzw. durch den Ringraum und das Innenrohr des Gemischreglers zugeführten Komponenten zu gewährleisten, ist in geringem Abstand von der Austrittsöffnung des Innenrohres 6 im Gehäuse eine Prallplatte 14 angeordnet, die durch z.B. drei Distanzstücke 15 mit dem Innenrohr verbunden ist.

Der Abstand der Prallplatte 14 vom Innenrohraustritt bzw. die Länge der Distanzstücke ist abhängig vom Durchmesser des Innenrohres bzw. von der Menge der durch das Innenrohr zugeführten Komponente, die durch die Prallplatte auf die Gehäusewand zu bzw. in die aus dem Ringraum ausströmende Komponente hinein umgelenkt werden soll. Da durch diese Massnahme nicht unter allen Betriebsbedingungen, d.h. insbesondere nicht bei geringem Mengenfluss der durch das Innenrohr zugeführten Komponente, eine homogene Vermischung beider Komponenten gewährleistet ist, ist erfindungsgemäss in Strömungsrichtung des Gemisches hinter der Prallplatte eine weitere Mischeinrichtung angeordnet. Wie aus Fig. 1 und 3 ersichtlich ist, besteht diese aus hintereinander und versetzt zueinander im Gehäuse quasi sternförmig angeordneten Mischelementen 16, 17 und 18 von denen jedes aus drei Strömungsführungsblechen 19 besteht, die sich vom Mittelpunkt bzw. der Gehäuseachse zum Rand hin verbreitern. Jedes dieser Strömungsführungsbleche ist entlang seiner Längsachse bzw. radial zur Gehäuseachse mittig aufgewölbt. Beim dargestellten Ausführungsbeispiel überdekken die symmetrisch angeordneten Strömungsführungsbleche jedes Mischelementes insgesamt ein Viertel des Gehäusequerschnittes. Die Oberseite der Aufwölbung kann abgerundet oder scharfkantig ausgeführt sein. Die beiden Mischelemente sind derart hintereinander eingebaut, dass die Längsachsen der zweiten Strömungsführungsbleche um 60° gegenüber denen des ersten Mischelementes gedreht sind, d.h. in der Mitte der freien Durchtrittsquerschnitte des ersten Mischelementes liegen.

Bei Anwendung von drei Mischelementen hat es sich als vorteilhaft erwiesen, diese Winkelverschiebung beizubehalten, so dass die Strömungsführungsbleche des dritten Mischers sich in gleicher Stellung wie die des ersten befinden.

Die zweckmässigste bzw. notwendige Anzahl der Mischelemente hängt von den physikalischen Eigenschaften, z.B. Dichte und Zähigkeit, der zu mischenden Medien ab. Für die Mischung von Gasen, z.B. Luft und Brenngas, hat sich die Anordnung von drei Mischelementen als ausreichend erwiesen, um eine völlig homogene Mischung der Komponenten zu erzielen.

Die Anordnung bzw. Aufstellung der vorstehend beschriebenen erfindungsgemässen Gemischregelvorrichtung kann grundsätzlich beliebig erfolgen. Es hat sich jedoch in der Praxis erwiesen, dass eine senkrechte Anordnung aus folgenden Gründen besonders zweckmässig ist: Die an der Gehäusewand anliegenden Teile der Dichtungs- und Absperrelemente 8, 11 und 12 unterliegen in diesem Fall nur einem minimalen Abrieb bzw. Verschleiss, da im Gegensatz zu einer waagerechten Anordnung keine gewichtsbedingten ungleichmässigen Kräfte auf sie einwirken. Ausserdem können sich bei abwärts gerichteter Strömung keine Ablagerungen von in den Medien enthaltenen, insbesondere festen — bei Mischung von Gasen auch flüssigen — Verunreinigungen im Innenrohr oder im Ringraum der Vorrichtung ansammeln.

Die erfindungsgemässe Gemischregelvorrichtung kann schliesslich auch — bei entsprechender Wahl des Abstandes zwischen den Dichtungs- und Absperrorganen 11 und 12 im Verhältnis zur Gemischeintrittsöffnung 2 — die Funktion eines Absperrorganes erfüllen, die dadurch erreicht wird, dass einerseits das Dichtungs- und Absperrorgan 12 (durch Axialverschiebung des Innenrohres) in eine Position stromabwärts der Gehäuseeintrittsöffnung 2 und andererseits (durch Drehung des Innenrohres) die Gehäuseeintrittsöffnung 3 durch das Rohrsegment 13 verschlossen wird.

Abschliessend wird als ein Anwendungsbeispiel die Verwendung des neuen Gemischreglers für die Erzeugung von Brenngas zur Spitzenbedarfsdeckung in der öffentlichen Gasversorgung beschrieben. Für die Deckung des insbesondere im Winter auftretenden Spitzenbedarfes wird dem üblicherweise verteilten Erdgas häufig ein Gemisch aus Luft und Flüssiggas zugesetzt, dessen Brennwert und Wobbe-Index dem Erdgas angepasst sein muss. Da das handelsübliche Flüssiggas, das im wesentlichen ein Gemisch aus Propan und Butan ist, diese Hauptkomponenten in wechselnden Mengen enthalten kann und in Sonderfällen fast ausschliesslich aus einer dieser Komponenten besteht, muss also das Mengenverhältnis von Luft und Flüssiggas zueinander dem jeweils verwendeten Flüssiggas angepasst werden. Ausserdem muss selbstverständlich die erzeugte Gemischmenge dem Bedarf angepasst werden. Um ein für die öffentliche Gasversorgung geeignetes Gemisch mit einem Heizwert von 12,31 kWh/m³ zu erzeugen, ist z.B. bei einem Flüssiggasgemisch aus 95% Propan und 5% Butan das Mischungsverhältnis mit Luft 1:1,32. Wird ein Flüssiggasgemisch aus 10% Propan und 90% Butan verwendet, beträgt dieses Mischungsverhältnis mit Luft 1:1,95. Derartige Mischungsverhältnisse lassen sich mit dem neuen Gemischregler auf einfachste Weise mit grosser Genauigkeit von besser als 1% einstellen. Gleichzeitig kann die Gemischmenge zwischen der Maximal- oder Nennleistung und etwa 10% dieses Wertes ebenfalls einfach und genau geregelt werden.

## Patentansprüche

1. Vorrichtung zur Mengen- und/oder Verhältnisregelung von zwei Gas- und/oder Flüssigkeitsströmen bei normalem oder erhöhtem Druck, die aus einem rohrförmigen Gehäuse (1) mit zwei seitlichen Eintrittsöffnungen (2, 3) mit Anschlussstutzen (4, 5) für die Zuführung der beiden Komponenten und einem Innenrohr (6) mit mindestens einer mit einer Gehäuseeintritsöffnung korrespondierenden seitliichen Eintrittsöffnung (7) und einem axialen Austritt besteht, und bei der das Innenrohr (6) mittels eines durch die Stirnseite (10) des Gehäuses geführten Stellantriebes im Gehäuse drehbar und/oder in Achsrichtung bewegbar ist, dadurch gekennzeichnet, dass der Aussendurchmesser des Innenrohres (6) mindestens 10% kleiner ist als der Innendurchmesser des Gehäuses (1), dass zwischen Innenrohr (6) und Gehäuse (1) mindestens drei Dichtungs- und Absperrelemente (8, 11, 12) mit dem beweglichen Innenrohr (6) derart fest verbunden sind, dass zwei dieser Elemente bei Bewegung des Innenrohres in Achsrichtung die freien Durchströmquerschnitte der beiden in Achsrichtung des Gehäuses im Abstand angeordneten Gehäuseeintrittsöffnungen gleichartig verkleinern oder vergrössern und das zwischen diesen beiden angeordnete dritte Dichtungs- und Absperrelement (11) bei allen Stellungen des Innenrohres den Ringraum in zwei Teilräume trennt, dass die beiderseits der Innenrohreintrittsöffnung(en) angeordneten Dichtungs- und Absperrelemente (8, 11) an der der Gehäuseinnenwand anliegenden Seite mit einem Rohrsegment (13) fest verbunden sind, das im Bereich der Gehäuseeintrittsöffnung (3) liegt und diese bei Drehung des Innenrohres (6) teilweise bis vollständig verschliesst oder öffnet, und dass an den Gehäuseeintrittsöffnungen an sich bekannte Differenz- und/oder Gleichdruckregler angeordnet sind.

2. Vorrichtung nach Anspruch 1, dadurch gekennzeichnet, dass das Innenrohr (6) im Bereich der Gehäuseeintrittsöffnung (3) mehrere, auf den Umfang des Innenrohres gleichmässig verteilte Eintrittsöffnungen (7) aufweist, deren gesamter freier Durchtrittsquerschnitt mindestens ebenso gross ist wie der grösste freie Durchtrittsquerschnitt der Gehäuseeintrittsöffnung (3).

3. Vorrichtung nach einem der Ansprüche 1 oder 2, dadurch gekennzeichnet, dass das Dichtungs- und Absperrelement (8), das bei Bewegung des Innenrohres (6) in Achsrichtung den freien Strömungsquerschnitt der mit der (den) Innenrohreintrittsöffnung(en) (7) korrespondierenden Gehäuseeintrittsöffnung (3) verringert oder vergrössert, scheibenförmig ausgebildet und einerseits mit dem Innenrohr (6), andererseits mit dem Stellantrieb für das Innenrohr fest verbunden ist (9).

4. Vorrichtung nach einem der Ansprüche 1 bis 3, dadurch gekennzeichnet, dass das Innenrohr (6) über einen flexiblen Rohrverbinder mit einer Anschlussleitung verbunden ist, die koaxial in einer an das Gehäuse (1) anschliessenden Leitung geführt wird.

5. Vorrichtung nach einem der Ansprüche 1 bis 3, dadurch gekennzeichnet, dass das Innenrohr in Strömungsrichtung hinter der Gehäuseeintrittsöffnung (2) endet und dass eine Prallplatte (14) hinter der axialen Austrittsöffnung des Innenrohres angeordnet ist, die den aus dem Innenrohr (6) austretenden Komponentenstrom in radialer Richtung auf die Gehäusewand ablenkt.

6. Vorrichtung nach einem der Ansprüche 1 bis 4, dadurch gekennzeichnet, dass im Gehäuse (1) hinter der axialen Austrittsöffnung des Innenrohres (6), vorzugsweise hinter der Prallplatte (14), in mindestens zwei hintereinander und senkrecht zur Gehäuseachse liegenden Ebenen zueinander versetzt je mindestens drei sich vom Mittelpunkt zum Rand verbreiternde, entgegen der Gemischströmrichtung mittig aufgewölbte Strömungsführungselemente (18) angeordnet sind.

## Revendications

1. Dispositif pour le réglage du débit et/ou du rapport de mélange de deux gaz et/ou liquides à la pression atmosphérique ou supérieure à celle-ci, composé d'un carter tubulaire (1), avec deux ouvertures d'entrée (2, 3) latérales et deux raccords (4, 5) pour l'amenée des deux fluides, et d'un tube intérieur (6) muni d'au moins une ouverture d'entrée latérale (7), correspondant à l'une des ouvertures d'entrée du carter, et d'une sortie axiale, le tube intérieur (6) pouvant être tourné et/ou déplacé axialement dans le carter au moyen d'un entraînement qui passe par le côté frontal (10) du carter, caractérisé par le fait que le diamètre extérieur du tube intérieur (6) est d'au moins 10% plus petit que le diamètre intérieur du carter (1), qu'entre le tube intérieur (6) et le carter (1) sont placés au moins trois éléments d'étanchéité et d'isolement (8, 11, 12), ces éléments étant connectés avec le tube intérieur (6) de façon que, lorsque le tube intérieur est déplacé dans le sens axial, deux de ces éléments diminuent ou augmentent dans le même rapport la section libre des deux ouvertures d'entrée du carter, ouvertures disposées dans le sens axial à distance l'une de l'autre, et que le troisième élément (11), disposé entre les deux autres, sépare l'espace annulaire en deux, quelle que soit la position du tube intérieur, que les deux éléments (8, 11) disposés de part et d'autre de l'ouverture (des ouvertures) d'entrée (7) du tube intérieur sont, du côté paroi intérieure du carter, connectés de façon rigide avec le segment de tube (13) qui est placé dans le périmètre de l'ouverture d'entrée du carter (3), ouvrant et fermant cette dernière partiellement ou complètement suivant le mouvement de rotation imparti au tube intérieur (6), et que les ouvertures d'entrée du carter sont équipées de régulateurs, en eux-mêmes connus, assurant le maintien entre les deux ouvertures d'une pression égale et/ou d'une pression différentielle prédéterminée.

2. Dispositif selon la revendication 1, caractérisé par le fait que le tube intérieur (6) est muni, dans le périmètre d'ouverture d'entrée du carter (3), de plusieurs ouvertures d'entrée (7) uniformément réparties sur sa circonférence et dont la section libre totale est au moins aussi grande que la plus grande section libre de l'ouverture d'entrée du carter (3).

3. Dispositif selon l'une des revendications 1 ou 2, caractérisé par le fait que l'élément d'étanchéité et d'isolement (8) diminuant ou augmentant, par le déplacement du tube intérieur (6) dans le sens axial, la section libre de l'ouverture d'entrée du carter (3) correspondant à l'ouverture (aux ouvertures) (7) du tube intérieur, est conçu sous la forme d'un disque et connecté de façon rigide tant au tube intérieur (6) qu'à l'entraînement (9) du tube intérieur.

4. Dispositif selon l'une des revendications 1 à 3, caractérisé par le fait que le tube intérieur (6) est raccordé par un raccord flexible à une conduite de raccordement, évoluant coaxialement dans une conduite raccordée au carter (1).

5. Dispositif selon l'une des revendications 1 à 3, caractérisé par le fait que le tube intérieur se termine, dans le sens de l'écoulement, derrière l'ouverture d'entrée du carter (2), et qu'une plaque de déflexion (14) est disposée an aval de l'ouverture de sortie axiale du tube intérieur pour déflecter le courant de fluide sortant du tube intérieur (6), dans le sens radial, sur la paroi du carter.

6. Dispositif selon l'une des revendications 1 à 4, caractérisé par le fait que le carter est équipé, en aval de l'ouverture de sortie axiale du tube intérieur (6), de préférence en aval de la plaque de déflexion (14), sur au moins deux niveaux situés l'un derrière l'autre, de chaque fois au moins trois éléments de guidage de l'écoulement (18), décalés les uns par rapport aux autres, qui s'élargissent depuis le centre jusqu'à la circonférence et sont légèrement bombés au milieu dans le sens opposé au sens de l'écoulement.

## Claims

1. A device for controlling the flow rates and/or the mixing ratio of two gases and/or liquids, at atmospheric pressure or above atmospheric pressure, consisting of a tubular body (1) with two inlet orifices (2, 3) and two inlets (4, 5) for the entry of the two fluids into said device, said inlets being arranged on any side of said tubular body, and an inner tube (6) with not less than one lateral inlet orifice (7) corresponding with one of the inlet orifices of said body and an outlet arranged axially, the inner tube (6) being designed for rotation and/or axial travel by means of an operator entering said device through the face (10) of said body, characterized in that the outside diameter of said inner tube (6) is not less than 10% smaller than the inside diameter of said body (1), and in that not less than three sealing and isolating elements (8, 11, 12), arranged in the space between said inner tube (6) and said body (1), are firmly connected with the mobile inner tube (6) so that two of said elements will simultaneously decrease or increase the unrestricted cross-sectional area of the two orifices in the body referred to hereinabove and spaced axially on any of the sides of said body, as said inner tube (6) is moved in the axial direction, and the third sealing and isolating element (11) located between said other two elements will separate the annular space at all positions of the inner tube (6) into two separate spaces, and in that the two sealing and isolating elements (8, 11) arranged on the two sides of the inlet orifice(s) (7) of the inner tube (6) are firmly connected with a tube section (13) in the area of inlet orifice (3) of the body (1) at the body wall ends of said elements (8, 11), and partly or fully close or open said inlet orifice (3) as the inner tube (6) is rotated, and in that governors of known design are incorporated in the device upstream of the two inlet orifices (2, 3) to maintain equal pressures in said two orifices and/or to maintain a pre-selected pressure difference between said two inlet orifices.

2. A device according to Claim 1, characterized in that several inlet orifices (7) are spaced evenly over the circumference of the inner tube (6) in the area of inlet orifice (3) in the body (1) of the device, the total unrestricted cross-section of said inlet orifices (7) being not less than the maximum total unrestricted cross-section of said inlet orifice (3).

3. A device according to one of Claims 1 or 2, characterized in that the sealing and isolating element (8) increasing or decreasing the unrestricted passage of inlet orifice (3) in the body (1) corresponding with the inlet orifice(s) (7) in the inner tube (6), as the inner tube (6) is moved in the axial direction, is of a disk type design and firmly connected with the inner tube (6) and the inner tube operator (9).

4. A device according to one of Claims 1 to 3, characterized in that the inner tube (6) is connected with a connection pipe by means of a flexible joint, said connection pipe being coaxial within a line connected to the body (1).

5. A device according to one of Claims 1 to 3, characterized in that the inner tube ends downstream of inlet orifice (2) in the body, and in that a deflector plate (14) is arranged downstream of the axial outlet of the inner tube (6) so that the fluid leaving the inner tube (6) will be deflected radially to the wall of the body (1).

6. A device according to one of Claims 1 to 4, characterized in that not less than three flow guiding elements (18), widening from the center to the circumference and bulged in the center in the direction opposite to the direction of mixture flow, are incorporated in the body (1) downstream of the axial outlet orifice of the inner tube (6), and preferably downstream of the deflector plate (14), in not less than two sucessive planes perpendicular to the body axis in an offset arrangement.

Fig.1

Fig. 2

Fig. 3

0 065 685